# FASCICULE DE BREVET EUROPEEN

(11) **EP 3 360 384 B1**
(45) Date de publication et mention de la délivrance du brevet: **15.09.2021**
(21) Numéro de dépôt: 16775250.0
(22) Date de dépôt: 04.10.2016
(51) Int. Cl.: H04W 74/08, H04W 48/20, H04W 84/10

(54) **METHODE ET DISPOSITIF DE COMMUNICATION SANS FIL ENTRES DES OBJETS CONNECTÉS ET DES PASSERELLES**
VERFAHREN UND VORRICHTUNG ZUR DRAHTLOSEN KOMMUNIKATION ZWISCHEN VERBUNDENEN OBJEKTEN UND GATEWAYS
METHOD AND DEVICE FOR WIRELESS COMMUNICATION BETWEEN CONNECTED OBJECTS AND GATEWAYS

(30) Priorité: 05.10.2015 BE 201505622
(43) Date de publication de la demande: 15.08.2018
(73) Titulaire: Crohas, Henri, 1160 Auderghem (BE)
(72) Inventeur: Crohas, Henri, 1160 Auderghem (BE)
(74) Mandataire: Pecher, Nicolas
(86) Numéro de dépôt international: PCT/EP2016/073596
(87) Numéro de publication internationale: WO 2017/060207

(56) Documents cités:
- WO-A1-2009/072087
- US-A1- 2003 145 092
- US-A1- 2010 232 369
- US-A1- 2013 121 263
- US-A1- 2014 111 313
- US-A1- 2014 177 604
- "LoRa MAC Specification;LTN(14)011004_LoRa_MAC_Speci fications", ETSI DRAFT; LTN(14)011004_LORA_MAC_SPECIFICATIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 16 janvier 2014 (2014-01-16), pages 1-23, XP014159442,

## Description

### Domaine technique

L'invention se rapporte aux protocoles de communications dans un réseau radiofréquence et plus particulièrement à des méthodes permettant ce type de communications au sein d'un réseau sans fil à longue portée et faible puissance. Dans son application dans un modèle en couches, l'invention se rapporte au protocole de la couche de liaison (couche comprenant le Media Access Control MAC). L'invention se rapporte aussi à des dispositifs implémentant ces méthodes.

### Etat de la technique

On connait des procédés d'échange de données dans un réseau sans fil comportant des objets connectés, des passerelles et un serveur central. Par exemple, la demande de brevet US 2014/0111313 divulgue une méthode de communication dans laquelle un objet connecté doit réaliser de nombreuses étapes avant de se connecter à une passerelle. Ces étapes consistent en :
- l'écoute d'un signal périodique contenant un signal balise émis par au moins une passerelle ;
- la synchronisation de l'horloge interne de l'objet connecté avec le signal balise ;
- l'identification de la passerelle par l'objet connecté grâce au signal balise contenu dans le signal périodique ;
- la sélection de la passerelle ayant le signal balise le plus puissant ;
- l'envoi d'un message sur un créneau temporel de requête de jonction (*join request*) par l'objet connecté ;
- l'identification de l'objet connecté par la passerelle et attribution d'un créneau temporel dans le signal périodique pour les communications ;
- la réception du créneau temporel par l'objet connecté durant un créneau d'accusé de réception de jonction (*join acknowledgement*) *;*
- la communication entre l'objet connecté et la passerelle sur le créneau temporel attribué.
Ce type de protocole présente plusieurs limitations. Premièrement, la gestion du temps d'utilisation est loin d'être optimale car le découpage du signal périodique en fenêtres temporelles et sous-fenêtres temporelles allonge les délais entre les communications. Deuxièmement, si on augmente le nombre de passerelles, la durée du signal périodique augmente (ou le nombre de sous-fenêtres diminue) ce qui allonge d'autant plus les délais entre les communications (ou réduit le nombre de sous-fenêtres attribuable par une passerelle). Troisièmement, le nombre de créneaux temporels attribuable par une passerelle à des objets connectés est limité pour que le signal périodique ne devienne pas trop long. Les risques de saturation du réseau deviennent donc importants. Quatrièmement, l'utilisation fréquentielle du réseau est limitée et peu optimisée. Cinquièmement, les objets connectés doivent se resynchroniser régulièrement pour pouvoir communiquer dans son créneau temporel, ce qui consomme de l'énergie. En conclusion, ce protocole manque de souplesse, est peu adapté aux objets communiquant de manière ponctuelle et n'optimalise pas l'utilisation du temps utile aux communications.

On connait par la demande de brevet US 20130121263 une méthode de communication entre les nœuds d'un réseau de communication multicanal, dans laquelle un canal de contrôle est utilisé pour l'envoi d'un message de contrôle, et plusieurs canaux sont utilisés pour envoyer des données. L'identité du canal à utiliser pour échanger des données est indiquée dans le message de contrôle. Dans le réseau décrit dans ce document, les nœuds jouent tous un rôle identique. Autrement-dit, il s'agit d'un réseau pair-à-pair. Cette méthode ne s'applique pas à un réseau dans lequel des passerelles communiquent avec des objets connectés, et dans lequel les passerelles et les objets connectés jouent des rôles différents.

Un autre procédé d'échange de données dans un réseau sans fil est décrit dans les protocoles de communication LoRa (https://www.lora-alliance.org/) qui décrit un réseau comprenant un ensemble de macro-cellules comprenant chacune des objets connectés et une macro-passerelle (du genre posée sur un toit - rooftop). Chaque macro-passerelle est capable de recevoir plusieurs messages simultanément sur des canaux de fréquences différents et à des taux de transfert (ou débit, c'est-à-dire la quantité de données numériques transmises par unité de temps exprimé en bit/s ou octet/s) différents (environ 8 canaux et 8 taux de transferts). Un objet connecté connectable ayant un message à envoyer sélectionne semi-aléatoirement un canal et un facteur de compression (dépendant de sa distance par rapport à la macro-passerelle) et envoie son message. Ce protocole présente également plusieurs défauts. Premièrement, le temps d'utilisation n'est pas organisé : chaque objet connecté envoie ses données quand il le veut à la seule condition de ne pas dépasser les éventuelles limites d'utilisation légale. Dès lors, étant donné le grand nombre d'objets connectés potentiellement liés à une macro-passerelle, la probabilité de collision de messages peut devenir importante. Deuxièmement, la macro-passerelle n'envoie qu'exceptionnellement des informations. Les raisons sont que, lorsque la macro-passerelle émet un signal, elle éblouit les signaux montants et est alors incapable de recevoir un message. Une autre raison est que le temps d'émission dans une bande de fréquences publique et/ou le taux d'utilisation de cette bande par un émetteur sont dans la plupart des cas sévèrement restreints par l'autorité de réglementation hertzienne et comme ces macro-passerelles ambitionnent de servir un grand nombre d'objets, le temps d'émission qu'elles peuvent consacrer à des objets individuels s'en trouve être extrêmement limité. En conséquence, si la macro-passerelle émet, elle occupera une partie du temps ce qui réduira le temps disponible pour l'écoute des messages montants et contribuera à épuiser le capital de temps d'occupation de la voie descendante imparti par l'autorité de réglementation. Ceci augmentera donc les délais d'attente des objets connectés pour communiquer et les risques de collisions de messages. De plus, si la macro-passerelle émet régulièrement des messages elle risque d'atteindre rapidement les limites légales d'utilisation du temps. Pour les mêmes raisons, la macro-passerelle n'envoie qu'exceptionnellement un accusé de réception aux objets connectés ce qui peut également poser problème.
En d'autres termes, le temps d'utilisation du réseau n'est pas optimum et le réseau sature. Cette situation est d'autant plus probable que les macro-passerelles desservent des macro-cellules comprenant potentiellement un grand nombre d'objets connectés.

### Résumé de l'invention

L'invention est définie par les revendications indépendantes. Les revendications dépendantes définissent des modes de réalisation préférés de l'invention.

Selon un premier aspect, l'invention se rapporte à des procédés de communication dans un réseau de communication sans fil utilisant une pluralité de canaux présentant chacun une fréquence centrale et une largeur de bande, ledit réseau comprenant une pluralité d'objets connectés et au moins une passerelle, lesdits objets connectés et l'au moins une passerelle étant aptes à émettre et recevoir des messages dans chacun des canaux, au moins un de ces canaux, appelé canal balise, étant un canal de communication unidirectionnel réservé à l'émission périodique ou quasi-périodique de messages balise par les passerelles (120). Le message balise comprend au moins les éléments suivants : un préambule, soit une indication que la passerelle veut délivrer un message soit qu'elle est apte à recevoir au moins un message et une indication d'au moins un canal pour échanger au moins un message.

Un des buts de l'invention est de résoudre les problèmes de saturation des réseaux tel que décrit ci-dessus, d'optimiser l'utilisation du temps et des fréquences. Le procédé selon l'invention autorise potentiellement un nombre illimité d'objets connectés à échanger des communications avec une passerelle (en pratique, le nombre d'objets est limité par la capacité du réseau, c'est-à-dire le temps physique mis par les communications). De plus, l'invention permet de réduire le nombre de collisions de messages et autorise un ajout simple et efficace de passerelles dans le réseau. La solution proposée consiste en l'utilisation de messages balise émis par des passerelles sur un canal balise unidirectionnel et réservé pour l'émission périodique desdits messages balise. Ces messages balise permettent d'avertir les objets connectés de la disponibilité d'une passerelle pour émettre ou recevoir des messages et d'informer les objets connectés du canal sur lequel l'échange se fera. Ils permettent également aux objets connectés de sélectionner une passerelle avec laquelle ils auront une bonne communication. De plus, la procédure de communication est simple car les objets connectés peuvent envoyer un message à n'importe quel moment à partir de l'instant où ils reçoivent un message balise. Les objets connectés ne doivent donc plus s'associer à une passerelle particulière et / ou maintenir une horloge interne parfaitement synchronisée. Les objets connectés peuvent se synchroniser automatiquement sur le signal balise quand ils souhaitent transmettre ou recevoir des données. Les objets connectés sont libres de choisir une passerelle et peuvent en changer facilement. Les temps de communication et les fréquences utilisées sont donc bien organisés et rentabilisés. Enfin, grâce au message balise qui indique la présence d'une passerelle, d'autres passerelles peuvent s'organiser sans intervention extérieure et l'ajout d'une passerelle permet (sans intervention extérieure) d'augmenter les capacités du réseau.

Le premier procédé de communication dans un réseau de communication sans fil concerne les communications entre une pluralité d'objets connectés et au moins une passerelle. Ce procédé est un procédé par lequel :
(A). un objet connecté transfère un message vers une passerelle. Pour cela, l'objet connecté écoute le ou les canaux balise pour détecter au moins une partie d'au moins un message balise. Ensuite, l'objet connecté sélectionne une passerelle émettant un message balise perceptible par l'objet connecté. L'objet connecté réceptionne le message balise émis par la passerelle sélectionnée. Il vérifie ensuite, en consultant l'indication, contenue dans le message balise, que la passerelle veut soit délivrer un message soit qu'elle est apte à recevoir au moins un message. Enfin, l'objet connecté émet un message vers la passerelle sélectionnée sur au moins un canal indiqué dans le message balise.
(B). un objet connecté reçoit un message d'une passerelle Pour cela, l'objet connecté écoute le ou les canaux balise pour recevoir au moins un message balise. Ensuite, l'objet connecté vérifie que la passerelle veut lui délivrer un message. Enfin, l'objet connecté reçoit un message sur au moins un canal indiqué dans le message balise.

De préférence, un objet connecté écoute le ou les canaux balise pour détecter au moins une partie d'au moins un préambule, ladite partie du préambule permettant de déterminer un RSSI du signal transportant le message balise. L'objet connecté sélectionne ensuite une passerelle en fonction du RSSI. L'avantage de ce préambule est d'une part, d'éviter de perdre une partie utile du message et, d'autre part, de permettre une détection aisée du signal, le préambule étant, par exemple, constitué de signaux chirps puissants et facilement détectables. Dans le procédé alternatif, le message balise comprend aussi un préambule.

De préférence, le message balise comprend en outre au moins un identifiant d'au moins un objet connecté et un objet connecté vérifie que la passerelle veut lui délivrer un message et vérifiant que l'au moins un identifiant contenu dans le message balise est le sien. Ceci constitue une méthode simple et efficace pour que l'objet connecté s'assure que le message lui est destiné.

De préférence, l'objet connecté qui souhaite envoyer un message choisit son taux de transfert en fonction du RSSI pour que ce taux soit plus élevé lorsque le RSSI est élevé et plus faible lorsque le RSSI est plus faible. Cette étape, qui peut être répétée à chaque envoi, minimisant ainsi les aléas inhérents aux fluctuations du canal hertzien dans le temps, permet de mieux utiliser le temps utile en minimisant les temps de transfert lorsque les objets connectés sont proches de la passerelle. D'autre part, cela permet de garantir une bonne transmission des signaux à longue portée et à faible puissance lorsque l'objet connecté est plus éloigné de la passerelle. Le taux de transfert ou débit est défini comme la mesure de la quantité de données numériques transmises par unité de temps.

De préférence, l'objet connecté attend un laps de temps qui est fonction du taux de transfert choisi avant d'envoyer son message. En effet, la passerelle qui reçoit les messages peut devoir scanner les différents taux de transfert pour détecter le message, il faut donc que ce dernier soit envoyé au bon moment.

De préférence, l'objet connecté ou la passerelle émet ou reçoit un accusé de réception de la transmission radiofréquence sur le même canal que celui utilisé soit pour l'émission soit pour la réception. Cet accusé est émis par l'objet connecté ou la passerelle qui a reçu un message après la réception. Le but de cette étape est de prévenir l'émetteur que son message a bien été reçu. Le but de cet accusé est que si un émetteur ne reçoit pas d'accusé, il sait que son message n'a pas été délivré et il peut réessayer de l'envoyer à un moment ultérieur.

De préférence, l'accusé de réception est un accusé de réception de la transmission RF et est envoyé directement après la réception d'un message.

De préférence, l'accusé de réception est émis ou reçu avec un taux de transfert égal ou inférieur à celui du message reçu ou émis. Ceci permet de ne pas devoir scanner tous les taux de transfert pour trouver l'accusé de réception.

De préférence, la passerelle choisie par un objet connecté lorsqu'il veut envoyer un message est une des passerelles présentant le plus haut RSSI. Le but est d'assurer un transfert rapide et d'optimaliser le temps d'utilisation du réseau.

De préférence, la passerelle choisie par un objet connecté lorsqu'il veut envoyer un message est une passerelle présentant une haute qualité de service (QoS). De préférence, la passerelle choisie par un objet connecté est celle permettant de véhiculer dans de bonnes conditions un type de trafic donné, celle qui est disponible, qui a un bon débit, de bons délais de transmission, un faible taux de perte de paquets. Alternativement, la passerelle sélectionnée est celle présentant un rapport signal sur bruit de transmission élevé.

De préférence, le réseau comprend en outre un serveur central, ledit serveur central étant apte à attribuer une passerelle à un objet connecté. Pour des raisons diverses : qualité de service, économique, il peut être intéressant de lier un objet connecté à une passerelle.

Selon un deuxième aspect, l'invention consiste en un objet connecté comportant un modem radiofréquence caractérisé en ce qu'il met en œuvre une procédure décrite ci-dessus.

Le deuxième procédé de communication dans un réseau de communication sans fil concerne les communications entre une passerelle et un objet connecté. Dans ce procédé, le message balise peut être émis dans des fenêtres temporelles propres à chaque passerelle. Ce procédé est un procédé par lequel :
(A). une passerelle émet, dans sa fenêtre temporelle, un signal transportant un message balise.
(B). une passerelle reçoit au moins un message d'un objet connecté. Dans ce cas, la passerelle commence par écouter le ou les canaux assignés dans le message balise dans le but de détecter un message. Ensuite, la passerelle reçoit le message qu'elle a détecté.
(C). une passerelle envoie au moins un message à au moins un objet connecté sur l'au moins un canal indiqué dans le message balise.

De préférence, le message balise comprend en outre au moins un identifiant d'au moins un objet connecté. Une passerelle voulant envoyer un message à au moins un objet connecté envoie l'identifiant du ou des objets connectés dans son message balise pour le ou les informer que ladite passerelle a un message à lui ou leur délivrer.

De préférence, la passerelle qui veut recevoir un message scanne différents taux de transfert simultanément ou séquentiellement et écoute sur le ou les canaux assignés dans le message balise pour détecter un message. Cette étape permet de mieux utiliser le temps utile en minimisant les temps de transfert lorsque les objets connectés sont proches de la passerelle et qu'ils utilisent un haut taux de transfert. D'autre part, cela permet de garantir une bonne transmission des signaux à longue portée et à faible puissance lorsque l'objet connecté est plus éloigné de la passerelle et qu'il utilise un faible taux de transfert.

De préférence, le message envoyé par l'objet connecté comprend un préambule et la passerelle scanne différents taux de transfert et écoute sur le ou les canaux assignés dans le message balise pour détecter au moins une partie d'un préambule. L'avantage de ce préambule est d'une part, d'éviter de perdre une partie utile du message et, d'autre part, de permettre une détection aisée du signal, le préambule étant constitué de signaux chirps puissants et facilement détectables.

De préférence, les passerelles peuvent émettre leur message balise sur deux canaux balise parallèles. Les signaux émis transportant les messages balise sur les deux canaux étant, de préférence, orthogonaux.

De préférence, l'objet connecté ou la passerelle émet ou reçoit un accusé de réception de la transmission radiofréquence sur le même canal que celui utilisé soit pour l'émission soit pour la réception. Cet accusé est émis par l'objet connecté ou la passerelle qui a reçu un message après la réception. Le but de cette étape est de prévenir l'émetteur que son message a bien été reçu. Le but de cet accusé est que si un émetteur ne reçoit pas d'accusé, il sait que son message n'a pas été délivré et il peut réessayer de l'envoyer à un moment ultérieur.

De préférence, l'accusé de réception est un accusé de réception de la transmission RF et est envoyé directement après la réception d'un message.

De préférence, l'accusé de réception est émis ou reçu avec un taux de transfert égal ou inférieur à celui du message reçu ou émis. Ceci permet de ne pas devoir scanner tous les taux de transfert pour trouver l'accusé de réception.

Selon un troisième aspect, l'invention consiste en une passerelle comportant un modem radiofréquence caractérisé en ce qu'il met en œuvre une procédure décrite aux paragraphes concernant le deuxième procédé (c'est-à-dire ceux compris entre le paragraphe commençant par « Le deuxième procédé » et le paragraphe précédent celui-ci).

### Brève description des dessins

Ces aspects ainsi que d'autres aspects de l'invention seront clarifiés dans la description détaillée de modes de réalisation particuliers de l'invention, référence étant faite aux dessins des figures, dans lesquelles :
- la Fig.1 montre un exemple de réseau de communication sans fil ;
- la Fig.2a montre un exemple de bande de fréquence ISM 868MHz simplifié ;
- la Fig.2b montre un exemple de découpage du temps ;
- la Fig.2c montre un exemple de scan de deux fréquences avec un préambule de 10 symboles ;
- la Fig.3 montre un diagramme de la méthode communication entre un objet connecté et une passerelle selon l'invention ;
- la Fig.4 montre un diagramme de la méthode communication entre une passerelle et au moins un objet connecté selon l'invention ;
- la Fig.5 montre un diagramme de la méthode communication entre plusieurs passerelles selon un exemple pas couvert par les revendications ;
- la Fig.6 montre un diagramme de la méthode de synchronisation entre plusieurs passerelles selon un exemple pas ouvert par les revendications ;
- la Fig.7 montre un dispositif implémentant les méthodes selon l'invention relatives aux passerelles.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

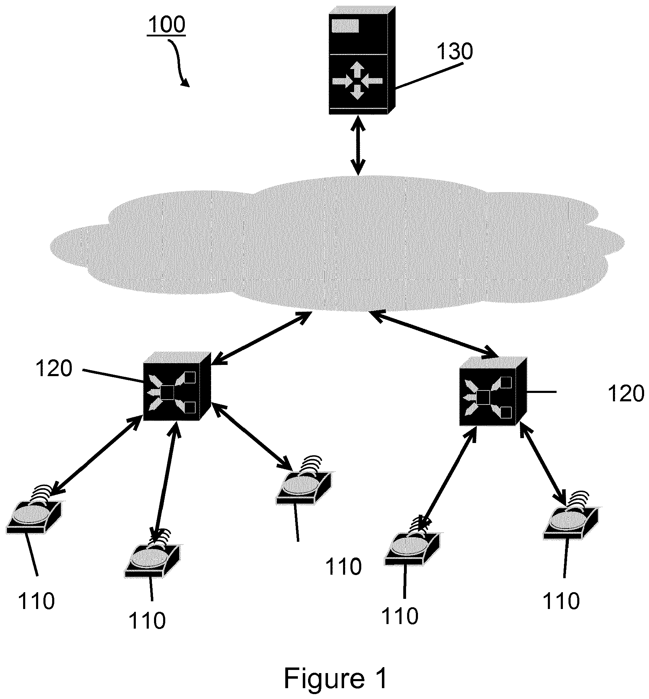

La Figure 1 montre un exemple de réseau de communication sans fil **100** comprenant une pluralité d'objets connectés sans fils **110,** au moins une passerelle **120.** De préférence, le réseau comprend une pluralité de passerelles. De préférence, la ou les passerelles sont connectées à un serveur central **130.** Cette connexion peut être une connexion réseau local, une connexion internet filaire (Ethernet) ou sans-fil (Wi-Fi). De préférence, le serveur est un serveur de type cloud. De préférence, le réseau objets connectés - passerelles est un réseau sans fil à longue portée et faible puissance (Low-Power Wide Area Network, LP-WAN).

Le terme usuel « objet connecté » doit être compris comme un objet qui est effectivement connecté à un réseau ou qui est connectable à un réseau.

Dans la présente invention, les objets connectés ne sont pas liés à une passerelle particulière, autrement dit, ils ne sont pas enregistrés de manière fixe à une passerelle. Ils peuvent changer de passerelle en fonction, par exemple, de la qualité du signal balise reçu, de la présence d'une nouvelle balise plus proche, d'un intérêt économique. Les objets sont, de préférence, des objets compatibles avec un réseau LP-WAN. Il est connu que ce type d'objets connectés ne communique pas beaucoup de données et pas souvent (typiquement quelques dizaines d'octets par jour). Il ne consomme donc pas beaucoup d'énergie électrique et n'occupe que ponctuellement la bande passante de communication. Par contre, le nombre d'objets connectés de type LP-WAN est potentiellement élevé dans la portée d'une passerelle (typiquement plusieurs dizaines, voire plusieurs centaines).

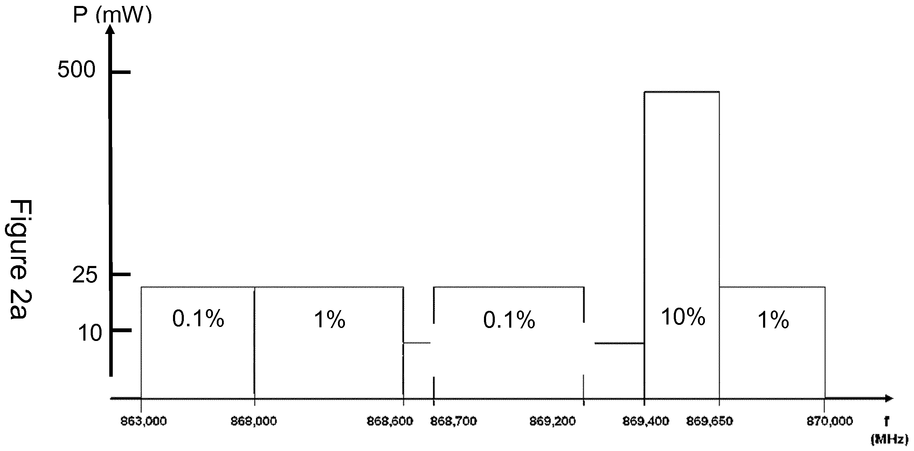

De préférence, le réseau utilise une pluralité de canaux de fréquence caractérisés par une fréquence centrale et une largeur de bande. Les objets connectés **110** et les passerelles **120** peuvent émettre et recevoir des messages dans chacun des canaux. La Figure 2a montre un exemple de bande de fréquence ISM 868MHz simplifié, les pourcentages indiquent le taux d'occupation temporel de la bande légalement autorisé (duty cycle) par un objet connecté. De préférence, les communications entre les objets connectés et les passerelles se font dans cette bande de fréquence. Alternativement, n'importe qu'elle autre bande de fréquence peut être utilisée.

De préférence, au moins un des canaux, appelé canal balise, est un canal unidirectionnel réservé à l'émission périodique ou quasi-périodique de messages balise par les passerelles **120.** Par exemple, dans la bande ISM 868 MHz (les bandes ISM, industriel, scientifique et médical, sont des bandes de fréquences qui peuvent être utilisées pour des applications industrielles, scientifiques, médicales, domestiques ou similaire, sans demande d'autorisation), le ou les canaux balise peuvent se situer dans la sous-bande 869.40 à 869.65 MHz dont le taux d'occupation admissible est de 10%. De préférence, on peut avoir 2 canaux balise de 62.5 kHz de largeur de bande et respectivement centrés sur les fréquences 869.46825 MHz et 869.58175 MHz. Alternativement, on peut avoir 1 canal balise de 125 kHz de largeur de bande, ou encore 4 canaux balise de 41.7 kHz de largeur de bande. Ces canaux peuvent avoir des facteurs d'étalement de spectre (spreading factor, SF) différents. De préférence, on ajustera le nombre de canaux balise à la sous-bande de fréquence utilisée en fonction de la largeur fréquentielle de celle-ci et des contraintes éventuelles de taux d'occupation autorisé de la bande ou sous-bande de fréquence.

En télécommunication, une (radio-)balise est un transmetteur qui émet un signal (balise) dans une bande de fréquence. Ce signal balise permet de signaliser la présence du transmetteur et à guider les récepteurs de ce signal par rapport au transmetteur. Ce transmetteur peut être associé à un obstacle (un phare maritime), un danger. Un message balise est donc un message unidirectionnel émis par une passerelle (transmetteur) à destination d'objets connectés et / ou d'autres passerelles (récepteurs).

Il est également connu par l'homme de métier qu'un canal (de fréquence) réservé signifie que la bande de fréquence est dédiée à une utilisation spécifique. Par exemple, la bande de fréquence centrée à 3023 kHz est la bande de fréquence internationale réservée pour les urgences aéronautiques, opérations de recherche et de sauvetage coordonnées, interconnexions (air/mer/terre). Le canal balise de l'invention est donc un canal de fréquence dédié à l'émission périodique ou quasi-périodique de messages balise par les passerelles **120,** c'est-à-dire que ce canal de fréquence est utilisé exclusivement et uniquement pour l'envoi des messages balise par les passerelles.

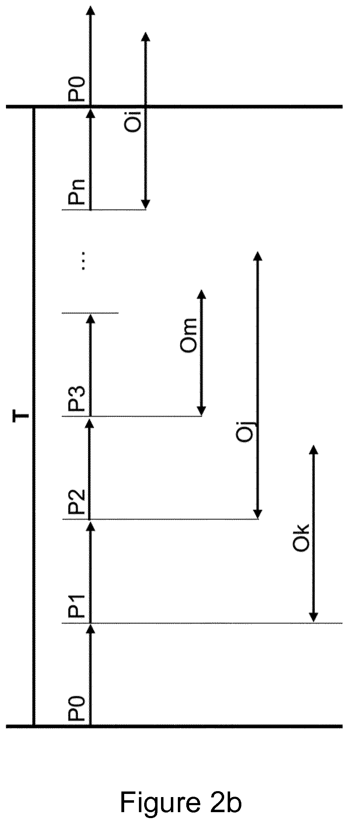

La Figure 2b montre un exemple de découpage du temps selon l'émission périodique de période T, de message balise. Sur cette figure, les flèches vers la droite indiquent l'émission d'un message balise qui est donc unidirectionnel, les doubles flèches indiquent soit message descendant (vers la droite) soit un message montant (vers la gauche) une seule de ces deux opérations pouvant être réalisées pendant une période T, le début de la communication étant toujours à l'origine gauche de la flèche, la durée de la communication pouvant être variable. Par exemple, les n passerelles **120** (P0, P1, ...) émettent l'une après l'autre leur message balise. De préférence, chaque passerelle émet son message balise dans une fenêtre temporelle qui lui est propre. Une fois son message balise émis une passerelle soit écoute pour recevoir un message montant, soit émet un message descendant pour un objet connecté **110** (Oi, j, k, m). De préférence, la durée de la transmission dépend de la taille du message à transmettre et peut être variable. De préférence, le nombre maximum de passerelles dépend des contraintes éventuelles du taux d'occupation autorisé et du nombre de canaux balise. Par exemple, dans le cas d'une limite à 10% et d'un seul canal balise, le nombre maximum de passerelle permettant d'optimiser le temps est de 10 passerelles si on considère un temps moyen de message balise de Tb = 50ms pour une période de cycle T de 500 ms et un temps de traitement par les puces de Tp = 4ms. En effet on a alors que : Tb/(Tb+Tp)/10 = 50/(50+4)/10 = 9.25%. Alternativement, deux passerelles peuvent émettre simultanément leur message balise sur deux canaux distincts, ce qui permet de doubler le nombre de passerelles maximum. De plus, ces passerelles émettant simultanément peuvent émettre sur des canaux orthogonaux se recouvrant l'un l'autre mais sans interférer du fait de l'orthogonalité de leurs signaux au niveau de la couche physique (par exemple en utilisant des chirps orthogonaux).

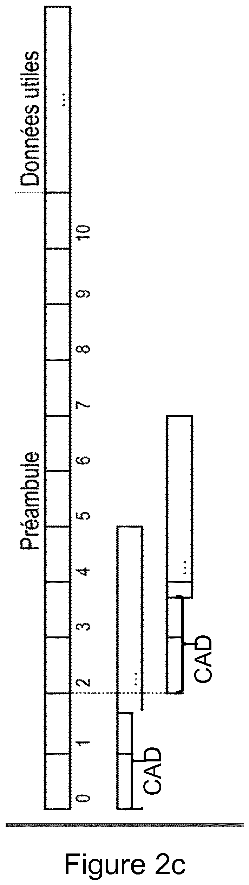

La possibilité que deux passerelles **120** émettent simultanément leur message balise est d'autant plus intéressante que certaines puces émetteur-récepteur radiofréquence (RF), tel que les puces SX127x de Semtech à la base du protocole de transmission LoRa au niveau de la couche physique, par exemple, peuvent détecter de l'activité sur un canal de fréquence (Channel Activity Détection CAD) en un temps très court en analysant très peu de symboles du signal. Ce CAD permet à un objet connecté **110** de détecter un signal avec seulement 1.8 symboles. De préférence, les messages échangés dans le réseau **100** comprennent un préambule d'une dizaine de symboles. La Figure 2c montre un exemple de scan de deux canaux de fréquence avec un préambule de 10 symboles, ces symboles précédant les données utiles du message. Par exemple, dans le cas d'un réseau comprenant deux canaux balise, un objet connecté peut détecter une activité sur un premier canal en analysant 1.8 symboles d'un préambule émis sur ce premier canal, puis il peut changer de canal et détecter une activité sur un second canal en analysant 1.8 symboles (si les signaux sont émis en même temps ce sont les symboles 2 à 3.8) d'un préambule émis sur ce second canal. Cette caractéristique de CAD des puces commes les puces SX127x, permet également d'évaluer la puissance en réception d'un signal reçu (Received Signal Strength Indication ou RSSI) en un temps très court de la même manière.

De préférence, le message balise comprend au moins une partie des éléments suivants :
a) un préambule : par exemple, une série de signaux chirps représentant chacun un symbole du signal. De préférence cette série comprend 5 à 20 signaux. De manière encore plus préférée de 8 à 12.
b) soit une indication que la passerelle veut délivrer un message soit qu'elle est apte à recevoir au moins un message : par exemple, cela peut se traduire par la présence d'un bit Uplink : si Uplink = 1 (liaison montante : la passerelle est apte à recevoir au moins un message), si Uplink = 0 (liaison descendante : la passerelle veut délivrer un message).
c) une indication d'au moins un canal pour échanger au moins un message : par exemple, cette indication peut se traduire par une série de bits (de préférence de 4 bits pour 16 canaux), cette série de bits codant un nombre associé à un canal particulier. Par exemple, si le bit code le nombre 1, cela signifie que l'échange de message aura lieu sur le canal 1 correspondant à une largeur de bande et une fréquence central convenue à l'avance et prédéfinie par exemple à la fabrication des objets connectés et passerelles.
d) un identifiant d'un objet connecté : par exemple, cet identifiant peut se traduire par une série de bits (de préférence 1 à 40, ou de préférence de 10 à 30, ou de préférence de 16 bits), si le bit Uplink = 0, cette série comprend un identifiant d'un objet connecté ou d'un groupe d'objets connectés auxquels sont destinés le message. Si le bit Uplink = 1, cette partie du message balise peut, par exemple, permettre de transmettre des drapeaux (flags) d'informations aux objets connectés.
e) une indication de canal compagnon : par exemple, cette indication peut se traduire par une série de bits de la même longueur que la série pour indiquer un canal pour échanger au moins un message. Cette indication peut être utilisée dans le cas où le nombre maximum de passerelles est atteint dans le réseau. Cette indication peut alternativement être utilisée dans le cas où deux passerelles sont très proches l'une de l'autre. Dans ces cas exemplatifs, une nouvelle passerelle peut devenir compagnon silencieux d'une passerelle émettant un signal balise. L'indication de canal compagnon permet à un objet connecté d'envoyer un message non seulement à la passerelle émettant mais à celle silencieuse, ce qui double la capacité de réception.
f) une indication du canal balise utilisé : par exemple, cette indication peut se traduire par un bit dans le cas où il n'y a que deux canaux balise.
g) une indication de la fenêtre temporelle utilisée : par exemple, cette indication peut se traduire par une série de bits (de préférence 1 à 20, ou de préférence de 2 à 10, ou de préférence de 4 bits), qui, associée à l'indication du canal balise utilisé, permettent aux passerelles de s'identifier ou d'être identifiées.
h) informations de contrôles : par exemple, un contrôle de redondance cyclique (CRC, Cyclic Redundancy Check).
i) une identification de groupe (cluster) : lorsque plusieurs réseaux se rapprochent pour former un plus grand réseau, le serveur central peut les grouper en sous-réseaux ou cluster qui sont identifiés par un nombre codé par une série de bits.

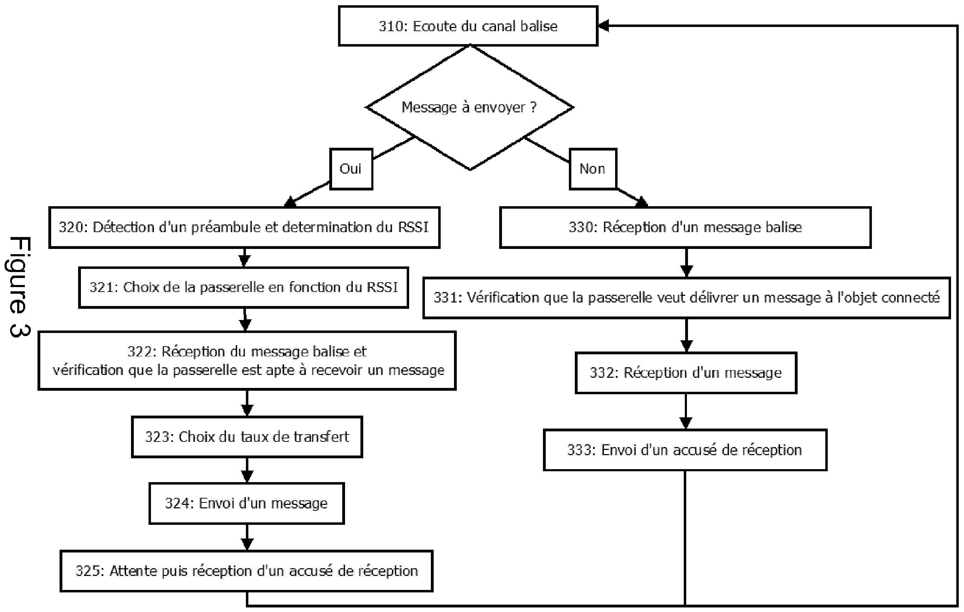

La Figure 3 montre un diagramme de la méthode communication entre un objet connecté **110** et une passerelle **120** selon l'invention. La première étape consiste en l'écoute d'au moins un canal balise **310.** La deuxième étape dépend du type de communication : soit l'objet connecté veut transmettre un message à la passerelle, soit l'objet connecté veut vérifier que la passerelle veut éventuellement lui délivrer un message et le cas échéant, recevoir ce message de la passerelle. Dans le premier cas, l'objet connecté qui veut transmettre un message à une passerelle effectue les étapes de détection d'au moins une partie d'au moins un message balise. De préférence, le message balise comprend un préambule et la partie détectée est une partie du préambule.

De préférence cette partie du message balise permet d'évaluer la puissance en réception d'un signal reçu (RSSI) **320.** Le RSSI permet de fournir une indication sur l'intensité du signal reçu. Alternativement, d'autres méthodes pour évaluer la force du signal peuvent être utilisées.

L'étape suivante consiste à sélectionner une passerelle **120,** de préférence, en fonction du RSSI **321.** La passerelle sélectionnée peut être celle présentant le plus haut RSSI. Alternativement, la passerelle sélectionnée est celle présentant une qualité de service (quality of service QoS) suffisante et donc celle qui permet de véhiculer dans de bonne condition un type de trafic donné, celle qui est disponible, qui a un bon débit, de bons délais de transmission ou un faible taux de perte de paquets. Alternativement, la passerelle sélectionnée est celle présentant un rapport signal sur bruit de transmission élevé.

Alternativement, le serveur central **130** peut lier un objet connecté **110** à une passerelle **120** préférentielle. L'objet connecté tentera toujours de se connecter en priorité à cette passerelle préférée. Dans le cas où il n'y arriverait pas, il peut se connecter à une passerelle présentant un bon RSSI.
Les buts de ce lien privilégié peuvent être variés mais un but économique peut être mis en avant. En effet, la rétribution pour l'utilisation du réseau se fait habituellement du point de vue des objets connectés. Chaque objet connecté se connectant à une passerelle paie une « redevance d'accès » au réseau **100.** Par exemple, les coûts de connexion peuvent être de 0.5 €/objet connecté/an. Les passerelles quant à elles sont peu coûteuses à produire et peuvent être vendues, par exemple, 50€ et être installée très facilement (alimentation via une prise de courant ou via une prise Ethernet, par exemple). Un installateur de passerelles peut alors devenir fournisseur d'accès à un réseau radiofréquence (RF) assez facilement. Il est alors très intéressant de pouvoir lier un objet connecté à une passerelle particulière pour que le fournisseur de service puisse être mieux rétribué en fonction du trafic qui transite par ses propres passerelles.

Une fois qu'une passerelle **120** a été sélectionnée par un objet connecté **110,** ce dernier reçoit le message balise en entier et vérifie que la passerelle est apte à recevoir un message **322.** Pour cela, l'objet connecté peut, par exemple, vérifier la valeur du bit Uplink contenue dans le message balise. Le message balise comprend également une indication d'au moins un canal pour échanger des messages et sur lequel la passerelle est à l'écoute.
Si la passerelle est apte à recevoir un message, l'objet connecté émet un message **324** vers cette passerelle sur le canal indiqué par la passerelle dans son message balise.

De préférence, l'objet connecté **110** choisit un taux de transfert **323** de son message en fonction du RSSI de telle sorte que le taux de transfert soit plus élevé si le RSSI est élevé et que le taux de transfert soit plus faible si le RSSI est bas. Par exemple, les puces SX127x utilisent la technique d'étalement de spectre au niveau de la couche physique radiofréquence (RF) qui est une méthode de transmission dans laquelle l'énergie émise est délibérément étalée ou distribuée dans le domaine fréquentiel. Le but de cette technique est d'assurer une bonne communication. En effet, les objets connectés les plus éloignés utiliseront un étalement plus grand et les objets connectés les plus proches utiliseront un étalement plus faible. Sur un temps donné, le taux de transfert de données sera donc plus faible pour les objets connectés les plus éloignés et plus grand pour les objets connectés proches. Le facteur d'étalement du spectre (spreading factor, SF) qui se définit comme le rapport entre la largeur de bande étalée et la largeur de bande non étalée, est donc une mesure indirecte du taux de transfert. Dès lors, plus le RSSI est élevé moins le spectre est étalé et plus le SF est faible et plus le taux de transfert est élevé. Un SF faible est également synonyme d'une transmission plus rapide puisque le taux de transfert est plus élevé. Par exemple, le nombre de taux de transfert peut être compris entre 1 et 20. De préférence, il est compris entre 1 et 10. De manière encore plus préférée entre 4 et 8. De préférence, les SF vont de 7 à 12.

De préférence, dès la fin de l'envoi de son message, un objet connecté **110** se met en mode écoute et attend pour recevoir un accusé de réception de la transmission radiofréquence RF **325** émis par la passerelle **120.** Le but de cet accusé de réception est, par exemple, d'indiquer à l'objet connecté que la transmission RF s'est bien déroulée. Dans un autre exemple, cet accusé peut contenir des informations sur la bonne transmission du message par le serveur central **130.**

De préférence, cet accusé de réception est reçu sur le même canal que celui utilisé pour la transmission du message. De préférence, l'accusé de réception est reçu avec un taux de transfert égal ou inférieur à celui de la transmission du message. De préférence, cet accusé de réception est un message court dont la partie utile comprend entre 8 et 32 bits, de préférence, la partie utile comprend 16 bits.

Si l'objet connecté **110,** ne reçoit pas d'accusé de réception, il peut de nouveau essayer d'envoyer son message lors de la période T suivante. Les raisons pour lesquelles un objet connecté peut ne pas recevoir un accusé de réception peuvent être variées : interférence, instabilité du canal de communication, fading, réflexions multiples du signal, mauvaise communication, interruption de la communication, coupure de courant privant la passerelle **120** de son alimentation, ... Néanmoins, une des raisons les plus courantes est la collision de messages. Si deux objets connectés émettent leur message en même temps, ces messages peuvent entrer en collision. Il y a alors deux scénarios possibles : soit un des messages est bien reçu et l'autre pas, soit aucun des messages n'est correctement reçu. Dans les deux cas, au moins un des deux objets connectés ne recevra pas son accusé de réception. Dans ce cas, le ou les objets connectés réessaieront d'envoyer leur message après un nombre aléatoire de période T (ce nombre étant compris, par exemple entre 1 et 3). Si une nouvelle collision se produit, le ou les objets connectés réessaieront après un nombre aléatoire de période T plus grand que le précédent (par exemple entre 4 et 8). Cette capacité à délivrer des accusés de réceptions est rendue possible par l'utilisation de plusieurs canaux de communication qui évitent d'atteindre les limites légales d'utilisation de bandes de fréquences publiques. Cette caractéristique procure un avantage important par rapport au protocole LoRa et au protocole décrit dans la demande de brevet US 2014/0111313. Dans le premier cas, la passerelle, bien qu'utilisant plusieurs canaux, est incapable de répondre à chaque objet connecté sous peine d'atteindre rapidement les limites légales et / ou d'occulter les messages montant vers elle. Dans le second cas, la mauvaise utilisation des canaux de fréquence et le découpage temporel fait qu'un objet connecté doit, au mieux, attendre son créneau temporel descendant de la période suivante pour recevoir cet accusé, ce qui peut être long dans le cas d'un réseau comprenant un grand nombre d'objets connectés.

Dans le cas où l'objet connecté **110** veut vérifier que la passerelle **120** veut éventuellement lui délivrer un message et le cas échéant, recevoir ce message de la passerelle, ce dernier commence par recevoir les messages balise **330** des différentes passerelles. L'objet connecté vérifie que le message balise indique que la passerelle qui l'a émis a un message à lui délivrer **331.**

De préférence, le message balise comprend un identifiant propre à l'objet connecté **110.** De préférence, cet identifiant peut être commun à un groupe d'objets connectés. Alternativement, l'identifiant peut comprendre une partie commune à une groupe d'objets connectés et une partie spécifique à chaque objet connecté. Ceci permettant de délivrer des messages à des groupes d'objets connectés ou de délivrer des messages individuels à chaque objet connecté. Alternativement, tout moyen permettant d'identifier directement ou indirectement un objet connecté ou un groupe d'objets connectés peut être utilisé (envoi de message à heure spécifique, cryptage spécifique, canal spécifique, ...).

De préférence, le message balise de la passerelle **120** indique sur quel canal le message est envoyé. De préférence, le message balise de la passerelle indique le taux de transfert utilisé pour envoyer le message à délivrer. Si le message est destiné à l'objet connecté **110,** ce dernier reçoit le message 332 sur le canal indiqué par la passerelle.

De préférence, l'objet connecté **110** qui a correctement reçu un message, émet un accusé de réception vers la passerelle **120.** De préférence, cet accusé de réception est reçu sur le même canal que celui utilisé pour la transmission du message. De préférence, l'accusé de réception est reçu avec un taux de transfert égal ou inférieur à celui de la transmission du message. De préférence, cet accusé de réception est un message court dont la partie utile comprend entre 8 et 32 bits, de préférence, la partie utile comprend 16 bits. De préférence, l'objet connecté émet son accusé de réception immédiatement après réception du message.

De préférence, lorsque l'objet connecté **110** n'a pas de message à envoyer, il écoute en continu le ou les canaux balise pour vérifier qu'une passerelle **120** n'a pas de message à lui délivrer ou encore, pour sélectionner la passerelle présentant le meilleur RSSI. Alternativement, lorsque l'objet connecté n'a pas de message à envoyer, il peut se mettre en veille et se réveiller périodiquement pour vérifier qu'une passerelle n'a pas de message à lui délivrer. De préférence, il se réveille après un nombre prédéfini de périodes T. Alternativement, un objet connecté ne reçoit des messages qu'après en avoir émis. De préférence, il reçoit ce message après un nombre prédéfini de périodes T, par exemple, après 2 périodes.

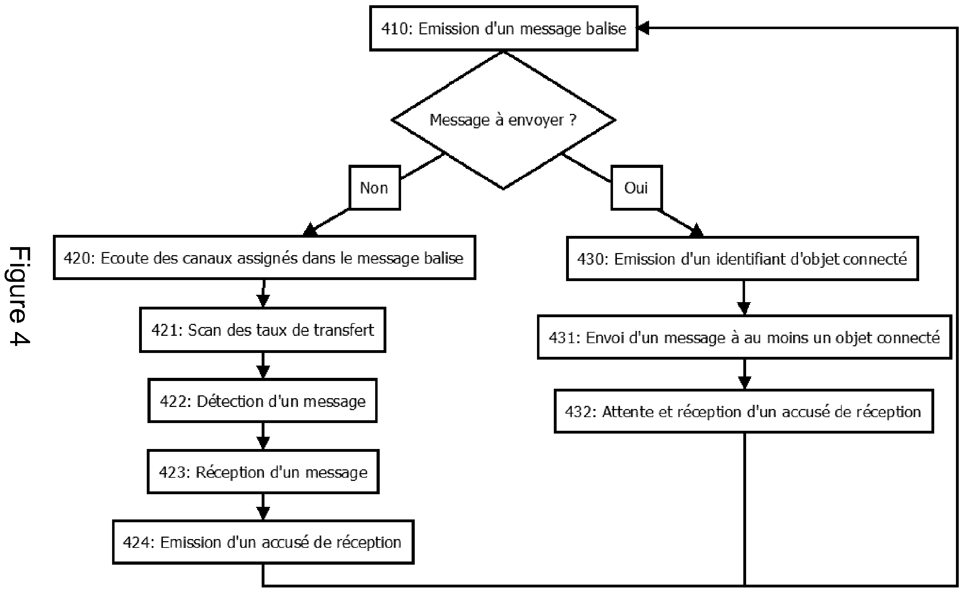

La Figure 4 montre un diagramme de la méthode communication entre une passerelle **120** et au moins un objet connecté **110** selon l'invention. La première étape consiste en l'émission d'un message balise **410** par une passerelle dans sa fenêtre temporelle d'émission dans la période T. Ensuite, soit la passerelle peut recevoir un ou plusieurs messages, soit elle a un message à délivrer à un ou plusieurs objets connectés.

Dans le premier cas, la passerelle **120** écoute le ou les canaux qu'elle a indiqués dans son message balise **420.** Ensuite, la passerelle détecte éventuellement un message **422** puis le reçoit **423.** De préférence, la passerelle 120 scanne simultanément ou séquentiellement différents taux de transfert pour détecter un message **421.** Ces taux de transfert dépendent du SF du message. Le message envoyé par l'objet connecté **110** peut comprendre un préambule et la passerelle détecte au moins une partie d'un préambule.

Lorsque le message reçu a été émis avec un taux de transfert élevé (autrement un SF faible), le temps de transmission est inférieur à une demi période T (temps de transfert < ½ T) il est alors possible de recevoir un second message durant la même période T. Pour cela, la passerelle **120** recherche un deuxième préambule à partir du temps t = ½ T. Si elle en détecte un, elle reçoit le second message.

De préférence, la passerelle émet un accusé de réception de la transmission radiofréquence (RF) **424.** Par exemple, cet accusé de réception est envoyé directement après la réception d'un message. Il peut également être envoyé sur le même canal et, de préférence avec un taux de transfert égal ou inférieur à celui du message émis.

Dans le second cas, la passerelle **120** a un message à délivrer à un ou plusieurs objets connectés **110.** Dans ce cas, la passerelle émet un message **431** vers un ou plusieurs objets connectés identifiés dans le message balise sur le canal indiqué dans le même message balise. Alternativement, la passerelle n'envoie un message à un objet connecté ou à un groupe d'objets connectés que lorsqu'ils ont eux-mêmes envoyé un message un nombre de période T prédéfini (par exemple, 2 périodes) avant. De préférence, le message balise comprend l'identifiant **430** de l'objet connecté ou du groupe d'objets connectés. De préférence, la passerelle se met en écoute directement après avoir émis son message et attend pour recevoir un ou plusieurs accusés de réception de la transmission radiofréquence (RF) **432.** De préférence, cet accusé de réception est reçu sur le même canal et, de préférence avec un taux de transfert égal ou inférieur à celui du message émis.

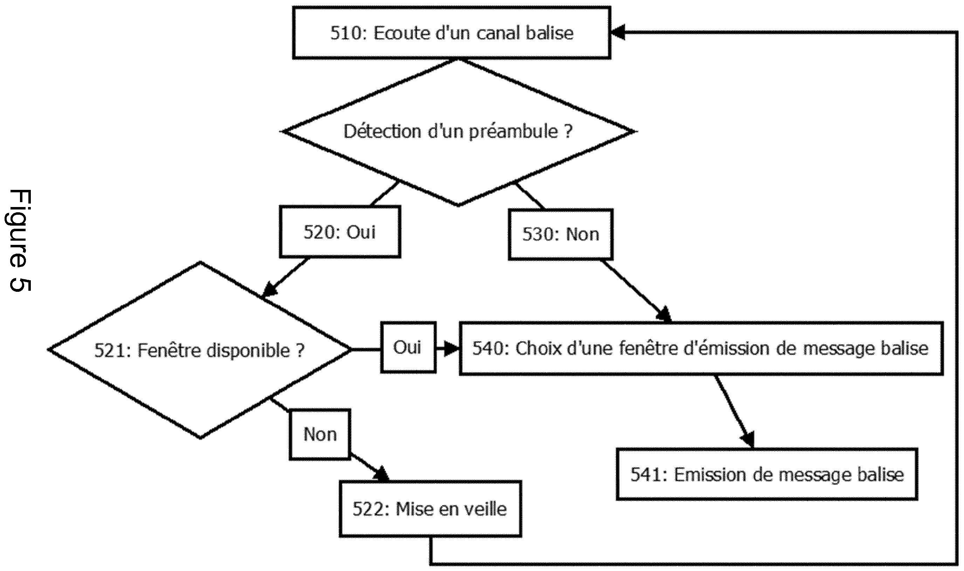

La Figure 5 montre un diagramme de la méthode communication entre plusieurs passerelles **120** selon un exemple pas couvert par les revendications. Lorsqu'une passerelle se connecte au réseau **100,** une fenêtre temporelle doit lui être attribuée. Pour cela, la passerelle écoute le ou les canaux balise pendant au moins une période T **510.** De préférence la passerelle écoute le ou les canaux balise un nombre suffisant de périodes T que pour pouvoir écouter tous les canaux balise au moins une période. Une fois que le ou les canaux balise ont été écoutés, soit la passerelle a détecté et reçu au moins une partie d'au moins un préambule d'un message balise **520** d'une autre passerelle déjà connectée au réseau, soit la passerelle n'a détecté aucun préambule **530.**

Dans le cas où la passerelle **120** a détecté et reçu au moins une partie d'au moins un préambule d'un message balise **520** d'une autre passerelle déjà connectée au réseau **100,** la passerelle vérifie qu'il existe au moins une fenêtre temporelle disponible **521.** Si au moins une fenêtre temporelle est disponible, la passerelle s'attribue cette fenêtre **540.** Ensuite, la passerelle émet son message balise dans sa fenêtre **541.** Si aucune fenêtre temporelle n'est disponible, la passerelle se met en veille **522.** De préférence, la passerelle mise en veille recherche de nouveau une fenêtre temporelle libre après un nombre de période T prédéfini. De préférence, la passerelle recherche de nouveau une fenêtre temporelle libre après au moins une période T.

Dans le cas où la passerelle **120** n'a détecté aucun préambule **530,** elle s'attribue une fenêtre temporelle **540.** Ensuite la passerelle émet son message balise dans sa fenêtre **541.**

De préférence, une passerelle **120** se connectant au réseau **100** pour la première fois s'identifie au serveur central **130** et, de préférence, lui envoie des informations sur les passerelles environnantes qu'elle a détectées.

De préférence, un nouvel objet connecté **110** se connectant au réseau **100** pour la première fois s'identifie au serveur central **130** via une passerelle **120** par exemple en lui envoyant son identifiant. De préférence, l'objet connecté reçoit un identifiant court du serveur central via une passerelle pour s'identifier dans ses communications ultérieures et, en particulier, pour l'échange d'accusés de réception.

Alternativement, le serveur central **130** peut ordonnancer l'ordre des fenêtres temporelles. Il peut attribuer les fenêtres temporelles aux passerelles **120.**

Lorsque le réseau **100** comprend un nombre maximum de passerelles **120** pour optimiser l'utilisation du temps et qu'une nouvelle passerelle est introduite, elle ne trouve pas de fenêtre temporelle libre. Le serveur central 130 peut désigner cette passerelle comme passerelle compagnon. Dans ce cas, la nouvelle passerelle n'émet pas de message balise mais se positionne comme un récepteur supplémentaire d'une autre passerelle qui émet un message balise. Le serveur central commande à cette passerelle émettrice de fournir des informations de canal compagnon dans son message balise pour qu'un objet connecté **110** puisse émettre un message vers la passerelle compagnon. Ceci permet, dans le meilleur des cas, de doubler la capacité de réception du réseau.

De préférence, un objet connecté **110** émettant un message choisira de manière pseudo-aléatoire entre le canal compagnon et le canal normal pour sa communication, les informations sur ces canaux étant transmises dans le message balise.

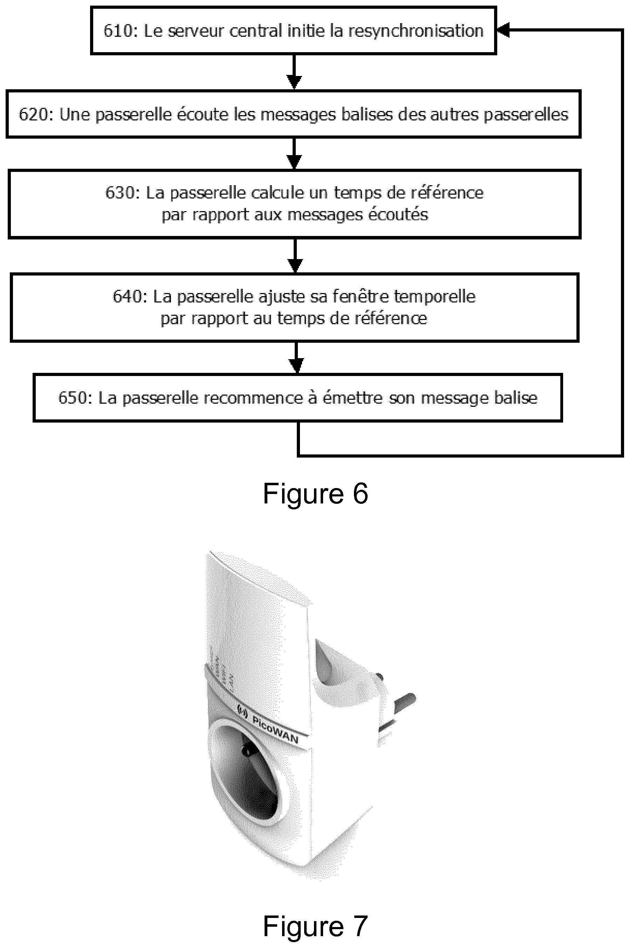

La Figure 6 montre un diagramme de la méthode de synchronisation entre plusieurs passerelles **120** selon un exemple pas couvert par les revendications. De préférence, le serveur central **130** contrôle et commande la synchronisation **610** entre les passerelles après un nombre prédéfini de période T. De préférence, ce nombre de période est d'au moins 10 périodes.

Une passerelle **120** qui veut se resynchroniser commence par écouter au moins une partie du message balise des autres passerelles **620.** Durant la resynchronisation, une passerelle n'émet donc pas son message balise pendant au moins une période T et de préférence pas plus de 4 périodes T. Ensuite, à partir des temps auquel la passerelle a entendu les (parties de) messages balise des autres passerelles, elle calcule un temps de référence **630.** À partir de ce temps de référence, la passerelle ajuste sa fenêtre temporelle **640** pour émettre son message balise au bon moment. Enfin, la passerelle recommence à émettre son message balise **650** dans sa fenêtre temporelle. Par exemple, si on considère une précision de l'ordre de 5 ppm pour l'horloge interne d'une passerelle, la déviation sera de l'ordre de 0.6 ms pour un cycle de 128 s. Compte tenu d'autres incertitudes, on peut prendre un facteur de sécurité de 3, c'est-à-dire que la déviation sera d'environ 2 ms sur un cycle de 128 s, ce qui constitue une déviation acceptable. Pour qu'une passerelle émette son message balise dans sa fenêtre temporelle, il faut que l'ensemble des passerelles se resynchronisent au minimum une fois par cycle de 128 s (Tsync) de préférence deux fois. Si on considère un ensemble de 10 passerelles, cela signifie que chaque passerelle se synchronise par rapport aux autres toutes les 12 périodes d'émission de message balise T (autrement dit, une fois sur 12, la passerelle n'émet pas son message balise). Ce qui donne: 12*T ≈ 6.5 s et 10*12*T ≈ 64 s ≈ ½ Tsync.

La Figure 7 montre un dispositif implémentant les méthodes relatives aux passerelles telles que décrite ci-dessus. Le dispositif comprend un modulateur-démodulateur (modem) radiofréquence (RF). De préférence, ce dispositif comporte une prise Ethernet et/ou une connexion Wi-Fi. Le dispositif peut être alimenté, par exemple, via une prise de courant ou via un câble Ethernet. De préférence, le dispositif utilise une puce SX127x et en de manière encore plus préférée la puce SX1276 telle que décrite dans la demande de brevet US2014219329. De préférence, ce dispositif fonctionne dans la bande de fréquence ISM 868 MHz. De préférence, le dispositif à une taille maximale inférieure à 30 cm.

Les dispositifs implémentant les méthodes relatives aux objets connectés comprennent un modulateur-démodulateur (modem) radiofréquence (RF). De préférence, le dispositif comprend une alimentation propre telle qu'une pile ou une batterie. De préférence, le dispositif utilise une puce SX127x et en de manière encore plus préférée la puce SX1276 telle que décrite dans la demande de brevet US 2014/219329. De préférence, ce dispositif fonctionne dans la bande de fréquence ISM 868 MHz. De préférence, le dispositif est compatible avec le MAC LoRaWAN™. De préférence, le dispositif est aussi compatible avec le MAC Sigfox™.

L'art antérieur décrit dans la demande de brevet US 2014/0111313 décrit un réseau comprenant des passerelles et des objets connectés dans lequel les passerelles émettent un signal périodique comprenant : un message balise, des créneaux temporels pour l'échange de données avec un objet connecté, un créneau requête de jonction et un d'accusé de réception de jonction.

Un tel réseau ne permet pas de connecter un nombre important d'objets connectés à une passerelle, n'utilise pas de manière optimale le temps de communication, ne tire pas profit de la possibilité d'utiliser plusieurs canaux d'échange de données et oblige les objets connectés à s'enregistrer auprès d'une passerelle. Ces problèmes sont liés à la structure du signal périodique qui, pour chaque passerelle, alloue des fenêtres de communication montante et descendante à chaque objet connecté lié à ladite passerelle, que cet objet connecté ait, ou non, un message à transmettre. Pour garantir une période de signal périodique raisonnable (de l'ordre de quelques dizaines de secondes), le nombre de fenêtres de communication doit être limité et par conséquent, le nombre d'objets connectés est également limité. Le réseau ne fournit pas un protocole de communication permettant à un grand nombre d'objets connectés de transmettre des messages à une passerelle. Le procédé selon l'invention résout ce problème grâce à l'émission par la passerelle d'un signal balise unidirectionnel dans un canal balise réservé à cet usage. Ce signal balise permet d'organiser les communications temporellement et en fréquence. Bien que l'utilisation d'un canal balise réservé soit connu en télécommunication, il n'est pas évident de développer un message balise dont la structure (préambule, indication d'un canal d'échange, disponibilité de la passerelle) telle que décrite dans la présente invention permette d'organiser de manière optimale les échanges de données dans une bande de fréquence comme la bande ISM à 868 MHz. Cette organisation permet à un objet connecté d'envoyer un message sur un canal spécifié dans le message balise uniquement quand il en a besoin. Cet objet connecté n'utilise donc pas de fenêtre temporelle de manière constante et ne se connecte à une passerelle que lorsque cela lui est nécessaire. Il est donc potentiellement possible de connecter un nombre infini d'objets connectés à une passerelle.

Le procédé selon l'invention résout aussi des problèmes annexes tels que la meilleure organisation du temps et de l'utilisation des fréquences de communication. Il permet aussi aux objets connectés de ne pas devoir rester synchronisés pour éviter d'émettre ou recevoir des données en dehors de leur créneau temporel et ce en permettant aux objets de se baser uniquement sur l'émission du signal balise. L'ajout d'une passerelle est également facilité par l'utilisation d'un canal balise. En effet, une nouvelle passerelle peut, par l'écoute du canal balise, détecter d'autres passerelles et s'intégrer dans la période d'émission, renforçant ainsi les capacités du réseau. Le canal balise permet enfin aux passerelles de se synchroniser les unes par rapport aux autres.

Un des buts de l'invention était de résoudre les problèmes de saturation des réseaux et d'optimiser l'utilisation du temps. Ce but a été réalisé par le recours à l'utilisation de messages balise émis sur un canal balise et émis périodiquement par des passerelles. Ces messages balise permettent d'organiser le temps en avertissant les objets connectés de la disponibilité d'une passerelle pour émettre ou recevoir des messages. Ces messages permettent également aux objets connectés de sélectionner une passerelle avec laquelle ils auront une bonne communication. La procédure de communication est aussi simple car les objets connectés peuvent envoyer un message à n'importe quel moment à partir de l'instant où ils reçoivent un message balise. Enfin, les passerelles s'organisent sans intervention extérieure et l'ajout d'une passerelle permet (sans intervention extérieure) d'augmenter les capacités du réseau et d'éviter sa saturation.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. En particulier, l'invention concerne également les combinaisons des caractéristiques techniques des modes de réalisation énoncés plus haut. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Procédé de communication dans un réseau (100) de communication sans fil utilisant une pluralité de canaux présentant chacun une fréquence centrale et une largeur de bande, ledit réseau (100) comprenant une pluralité d'objets connectés (110) et au moins une passerelle (120), lesdits objets connectés (110) et l'au moins une passerelle (120) étant aptes à émettre et recevoir des messages dans chacun des canaux, au moins un de ces canaux, appelé canal balise, étant un canal de communication unidirectionnel réservé à l'émission périodique ou quasi-périodique de messages balise par les passerelles (120), lesdits messages balise comprenant :
• un préambule ;
• soit une indication que la passerelle (120) veut délivrer un message soit qu'elle est apte à recevoir au moins un message ;
• une indication d'au moins un canal pour échanger au moins un message ;
procédé par lequel,
(A). un objet connecté (110) de ladite pluralité d'objets connectés (110) transfère un desdits messages vers une passerelle (120) de ladite au moins une passerelle (120) en exécutant les étapes :
1. écoute du ou des canaux balise (310) pour détecter au moins une partie d'au moins un desdits messages balise ;
2. sélection d'une desdites passerelles (120) émettant un message balise perceptible par l'objet connecté ;
3. réception du message balise émis par ladite passerelle (120) sélectionnée et vérification par ledit objet connecté (110), en consultant l'indication contenue dans le message balise, que cette passerelle (120) est apte à recevoir un message (322) ;
4. émission dudit message par ledit objet connecté (110) vers ladite passerelle (120) sélectionnée sur l'un des au moins un canal indiqués dans le message balise (324) ;
et/ou
(B). ledit objet connecté (110) de ladite pluralité des objets connectés reçoit un desdits message d'une des au moins une passerelle (120) en exécutant les étapes :
1. écoute du ou des canaux balise (310) pour recevoir au moins un desdits messages balise (330) ;
2. vérification par ledit objet connecté (110), en consultant l'indication contenue dans le message balise, que ladite passerelle (120) veut délivrer un message audit objet connecté (331) ;
3. réception d'un desdits messages par ledit objet connecté (110) sur l'un des au moins un canal indiqué dans le message balise (332) ;

2. Procédé selon la revendication 1, dans lequel l'étape (A)1 de la revendication 1 consiste en l'écoute du ou des canaux balise pour détecter au moins une partie d'au moins un préambule d'un desdits messages balise, ladite partie de préambule permettant de déterminer un RSSI, Received Signal Strength Indication, du signal transportant le message balise (320) et dans lequel la passerelle est sélectionnée à l'étape (A)2 est choisie en fonction du RSSI.

3. Procédé selon une quelconque des revendications précédentes, dans lequel le message balise comprend en outre au moins un identifiant d'au moins un objet connecté (110) et dans lequel l'étape (B)2 de la revendication 1 consiste en la vérification par l'objet connecté (110) que l'au moins un identifiant contenu dans le message balise est le sien (331).

4. Procédé selon la revendication 2, dans lequel l'étape (A) de la revendication 1 comprend l'étape supplémentaire : choix du taux de transfert (323) en fonction du RSSI pour que ce taux soit plus élevé lorsque le RSSI est élevé et plus faible lorsque le RSSI est plus faible, cette étape étant réalisée entre les étapes (A)3 et (A)4.

5. Procédé selon la revendication 4, dans lequel l'objet connecté (110) attend un laps de temps qui est fonction du taux de transfert choisi avant de réaliser l'étape (A)4.

6. Procédé selon une quelconque des revendications précédentes, dans lequel les étapes (A) et/ou (B) comprennent respectivement les étapes de réception et d'émission d'un accusé de réception (325, 333) sur le même canal que celui utilisé soit pour l'émission soit pour la réception, cette étape étant exécutée après l'émission ou la réception d'un message.

7. Procédé selon la revendication 6, dans lequel l'accusé de réception est un accusé de réception de la transmission radiofréquence et est envoyé directement après la réception d'un message.

8. Procédé selon une quelconque des revendications 6 ou 7, dans lequel l'accusé de réception est émis ou reçu avec un taux de transfert égal ou inférieur à celui du message reçu ou émis.

9. Procédé selon une quelconque des revendications 2 ou 4, dans lequel la passerelle (120) choisie à l'étape (A)2 est une passerelle (120) présentant le plus haut RSSI.

10. Procédé selon la revendication 1, dans lequel la passerelle (120) choisie à l'étape (A)2 est une passerelle (120) présentant une haute qualité de service (QoS).

11. Procédé selon la revendication 1, dans lequel le réseau (100) comprend en outre un serveur central, ledit serveur central étant apte à attribuer une passerelle (120) à un objet connecté.

12. Objet connecté (110) comportant un modem radiofréquence **caractérisé en ce qu'**il est apte à mettre en œuvre une procédure selon une quelconque des revendications 1 à 10.

13. Procédé de communication dans un réseau (100) de communication sans fil utilisant une pluralité de canaux présentant chacun une fréquence centrale et une largeur de bande, ledit réseau (100) comprenant une pluralité d'objets connectés (110) et au moins une passerelle (120), lesdits objets connectés (110) et l'au moins une passerelle (120) étant aptes à émettre et recevoir des messages dans chacun des canaux, au moins un de ces canaux, appelé canal balise, étant un canal de communication unidirectionnel réservé à l'émission périodique ou quasi-périodique de messages balise par les passerelles (120), lesdits messages balise étant émis dans des fenêtres temporelles propres à chaque passerelle (120) et comprenant :
• un préambule ;
• soit une indication que la passerelle (120) veut délivrer un message soit qu'elle est apte à recevoir au moins un message ;
• une indication d'au moins un canal pour échanger au moins un message ;
procédé par lequel,
(A). une des au moins une passerelle (120) émet, dans sa fenêtre temporelle, un signal transportant le message balise (410) ;
(B). le message balise indique que ladite passerelle veut recevoir au moins ledit message et ladite passerelle (120) reçoit au moins un desdits messages d'un objet connecté (110) de ladite pluralité d'objets connectés (110) :
1. ladite passerelle (120) écoute le ou les canaux indiqués dans le message balise pour détecter au moins un desdits messages (420) :
2. ladite passerelle (120) reçoit (423) au moins un desdits messages ; et/ou
(C). le message balise indique que ladite passerelle veut délivrer au moins ledit message et ladite passerelle (120) envoie au moins un desdits messages à au moins un objet connecté (110) de ladite pluralité d'objets connectés (110) sur l'un des au moins un canal indiqué dans le message balise (431) ;

14. Procédé selon la revendication 13, dans lequel le message balise comprend en outre au moins un identifiant d'au moins un objet connecté (110) et dans lequel l'au moins un objet connecté (110) auquel est envoyé un message à l'étape (C) de la revendication 13 est identifié par au moins ledit identifiant.

15. Procédé selon une quelconque des revendications 13 à 14, dans lequel l'étape (B).1 de la revendication 13 consiste en : la passerelle (120) scanne différents taux de transfert simultanément ou séquentiellement (421) et écoute sur le ou les canaux indiqués dans le message balise pour détecter un message (422).

16. Procédé selon la revendication 15, dans lequel le message envoyé par l'objet connecté (110) comprend un préambule et dans lequel l'étape (B).1 de la revendication 13 consiste en : la passerelle (120) scanne différents taux de transfert et écoute sur le ou les canaux indiqués dans le message balise pour détecter au moins une partie d'un préambule.

17. Procédé selon une quelconque des revendications 13 à 16, dans lequel les étapes (B) et/ou (C) comprennent respectivement les étapes d'émission et de réception d'un accusé de réception sur le même canal que celui utilisé soit pour la réception soit pour l'émission, cette étape étant exécutée après la réception ou l'émission d'un message (424, 432).

18. Procédé selon la revendication 17, dans lequel l'accusé de réception est un accusé de réception de la transmission RF et est envoyé directement après la réception d'un message.

19. Procédé selon la revendication 15 et une quelconque des revendications 17 à 18, dans lequel l'accusé de réception est émis ou reçu avec un taux de transfert égal ou inférieur à celui du message reçu ou émis.

20. Passerelle (120) comportant un modem radiofréquence **caractérisé en ce qu'**il est apte à mettre en œuvre une procédure selon une quelconque des revendications 13 à 19.

## Patentansprüche

1. Kommunikationsverfahren in einem drahtlosen Kommunikationsnetz (100), das eine Mehrzahl von Kanälen nutzt, die jeweils eine zentrale Frequenz und eine Bandbreite aufweisen, wobei das Netz (100) eine Mehrzahl von verbundenen Objekten (110) und mindestens ein Gateway (120) umfasst, wobei die verbundenen Objekte (110) und das mindestens eine Gateway (120) fähig sind, in jedem der Kanäle Nachrichten zu senden und zu empfangen, wobei mindestens einer dieser Kanäle, Beacon-Kanal genannt, ein unidirektionaler Kommunikationskanal ist, der dem periodischen oder quasiperiodischen Aussenden von Beacon-Nachrichten durch die Gateways (120) vorbehalten ist, wobei die Beacon-Nachrichten umfassen:
• eine Präambel;
• entweder eine Angabe, dass das Gateway (120) eine Nachricht ausgeben möchte oder, dass es fähig ist, mindestens eine Nachricht zu empfangen;
• eine Angabe mindestens eines Kanals, um mindestens eine Nachricht auszutauschen;
wobei bei dem Verfahren
(A). ein verbundenes Objekt (110) der Mehrzahl von verbundenen Objekten (110) eine der Nachrichten zu einem Gateway (120) des mindestens einen Gateways (120) transferiert, indem es die folgenden Schritte ausführt:
1. Abhören des oder der Beacon-Kanäle (310), um mindestens einen Teil mindestens einer der Beacon-Nachrichten zu detektieren;
2. Auswählen eines der Gateways (120), das eine Beacon-Nachricht sendet, die von dem verbundenen Objekt wahrnehmbar ist;
3. Empfangen der von dem ausgewählten Gateway (120) gesendeten Beacon-Nachricht und Verifizieren durch das verbundene Objekt (110), indem die in der Beacon-Nachricht enthaltene Angabe abgefragt wird, dass dieses Gateway (120) fähig ist, eine Nachricht (322) zu empfangen;
4. Senden der Nachricht durch das verbundene Objekt (110) an das ausgewählte Gateway (120) über einen des mindestens einen Kanals, die in der Beacon-Nachricht (324) angegeben sind;
und/oder
(B). das verbundene Objekt (110) der Mehrzahl von verbundenen Objekten eine der Nachrichten von einem des mindestens einen Gateways (120) empfängt, indem es die folgenden Schritte ausführt:
1. Abhören des oder der Beacon-Kanäle (310), um mindestens eine der Beacon-Nachrichten (330) zu empfangen;
2. Verifizieren durch das verbundene Objekt (110), indem die in der Beacon-Nachricht enthaltene Angabe abgefragt wird, dass das Gateway (120) eine Nachricht an das verbundene Objekt (331) ausgeben möchte;
3. Empfangen einer der Nachrichten durch das verbundene Objekt (110) über einen des mindestens einen Kanals, der in der Beacon-Nachricht (332) angegeben ist.

2. Verfahren nach Anspruch 1, bei dem Schritt (A)1 von Anspruch 1 im Abhören des oder der Beacon-Kanäle besteht, um mindestens einen Teil mindestens einer Präambel einer der Beacon-Nachrichten zu detektieren, wobei der Präambelteil es ermöglicht, einen RSSI, Received Signal Strength Indication, des die Beacon-Nachricht (320) transportierenden Signals zu bestimmen, und bei dem das Gateway in Schritt (A)2 in Abhängigkeit von dem RSSI ausgewählt wird.

3. Verfahren nach einem der vorhergehenden Ansprüche, bei dem die Beacon-Nachricht ferner mindestens einen Identifikator mindestens eines verbundenen Objekts (110) umfasst und bei dem Schritt (B)2 von Anspruch 1 in der Verifizierung durch das verbundene Objekt (110) besteht, dass der mindestens eine in der Beacon-Nachricht enthaltene Identifikator der seine (331) ist.

4. Verfahren nach Anspruch 2, bei dem Schritt (A) von Anspruch 1 den zusätzlichen Schritt umfasst: Auswählen der Transferrate (323) in Abhängigkeit von dem RSSI, damit diese Rate höher ist, wenn der RSSI hoch ist, und geringer, wenn der RSSI geringer ist, wobei dieser Schritt zwischen den Schritten (A)3 und (A)4 ausgeführt wird.

5. Verfahren nach Anspruch 4, bei dem das verbundene Objekt (110) eine Zeitspanne wartet, die von der ausgewählten Transferrate abhängig ist, bevor es den Schritt (A)4 ausführt.

6. Verfahren nach einem vorhergehenden Ansprüche, bei dem die Schritte (A) und/oder (B) die Schritte des Sendens beziehungsweise Empfangens einer Empfangsbestätigung (325, 333) über denselben Kanal wie den, der entweder zum Senden oder zum Empfangen genutzt wird, umfassen, wobei dieser Schritt nach dem Senden oder Empfangen einer Nachricht ausgeführt wird.

7. Verfahren nach Anspruch 6, bei dem die Empfangsbestätigung eine Empfangsbestätigung der Radiofrequenzübertragung ist und unmittelbar nach dem Empfangen einer Nachricht gesendet wird.

8. Verfahren nach einem der Ansprüche 6 oder 7, bei dem die Empfangsbestätigung mit einer Transferrate gesendet oder empfangen wird, die gleich oder geringer als die der empfangenen oder gesendeten Nachricht ist.

9. Verfahren nach einem der Ansprüche 2 oder 4, bei dem das im Schritt (A)2 ausgewählte Gateway (120) ein Gateway (120) ist, das den höchsten RSSI aufweist.

10. Verfahren nach Anspruch 1, bei dem das im Schritt (A)2 ausgewählte Gateway (120) ein Gateway (120) ist, das eine hohe Dienstgüte (QoS) aufweist.

11. Verfahren nach Anspruch 1, bei dem das Netz (100) ferner einen zentralen Server umfasst, wobei der zentrale Server fähig ist, ein Gateway (120) einem verbundenen Objekt zuzuweisen.

12. Verbundenes Objekt (110) mit einem Radiofrequenzmodem, **dadurch gekennzeichnet, dass** es fähig ist, ein Verfahren nach einem der Ansprüche 1 bis 10 umzusetzen.

13. Kommunikationsverfahren in einem drahtlosen Kommunikationsnetz (100), das eine Mehrzahl von Kanälen nutzt, die jeweils eine zentrale Frequenz und eine Bandbreite aufweisen, wobei das Netz (100) eine Mehrzahl von verbundenen Objekten (110) und mindestens ein Gateway (120) umfasst, wobei die verbundenen Objekte (110) und das mindestens eine Gateway (120) fähig sind, in jedem der Kanäle Nachrichten zu senden und zu empfangen, wobei mindestens einer dieser Kanäle, Beacon-Kanal genannt, ein unidirektionaler Kommunikationskanal ist, der dem periodischen oder quasiperiodischen Aussenden von Beacon-Nachrichten durch die Gateways (120) vorbehalten ist, wobei die Beacon-Nachrichten in für jedes Gateway (120) spezifischen Zeitfenstern gesendet werden und umfassen:
• eine Präambel;
• entweder eine Angabe, dass das Gateway (120) eine Nachricht ausgeben möchte oder, dass es fähig ist, mindestens eine Nachricht zu empfangen;
• eine Angabe mindestens eines Kanals, um mindestens eine Nachricht auszutauschen; wobei bei dem Verfahren
(A). eines des mindesten einen Gateways (120) in seinem Zeitfenster ein Signal sendet, das die Beacon-Nachricht (410) transportiert;
(B). die Beacon-Nachricht angibt, dass das Gateway mindestens die Nachricht empfangen möchte und das Gateway (120) mindestens eine der Nachrichten eines verbundenen Objekts (110) der Mehrzahl von verbundenen Objekten (110) empfängt:
1. das Gateway (120) hört den oder die in der Beacon-Nachricht angegebenen Kanäle ab, um mindestens eine der Nachrichten (420) zu detektieren:
2. das Gateway (120) empfängt (423) mindestens eine der Nachrichten;
und/oder
(C). die Beacon-Nachricht angibt, dass das Gateway mindestens die Nachricht ausgeben möchte, und das Gateway (120) mindestens eine der Nachrichten an mindestens ein verbundenes Objekt (110) der Mehrzahl von verbundenen Objekten (110) über einen des mindestens einen Kanals, der in der Beacon-Nachricht (431) angegeben ist, sendet.

14. Verfahren nach Anspruch 13, bei dem die Beacon-Nachricht ferner mindestens einen Identifikator mindestens eines verbundenen Objekts (110) umfasst und bei dem das mindestens eine verbundene Objekt (110), an das im Schritt (C) von Anspruch 13 eine Nachricht gesendet wird, durch mindestens den Identifikator identifiziert wird.

15. Verfahren nach einem der Ansprüche 13 bis 14, bei dem Schritt (B).1 von Anspruch 13 besteht in: das Gateway (120) scannt verschiedene Transferraten gleichzeitig oder sequenziell (421) und hört den oder die in der Beacon-Nachricht angegebenen Kanäle ab, um eine Nachricht (422) zu detektieren.

16. Verfahren nach Anspruch 15, bei dem die vom verbundenen Objekt (110) gesendete Nachricht eine Präambel umfasst und bei dem Schritt (B).1 von Anspruch 13 besteht in: das Gateway (120) scannt verschiedene Transferraten und hört den oder die in der Beacon-Nachricht angegebenen Kanäle ab, um mindestens einen Teil einer Präambel zu detektieren.

17. Verfahren nach einem der Ansprüche 13 bis 16, bei dem die Schritte (B) und/oder (C) die Schritte des Sendens beziehungsweise Empfangens einer Empfangsbestätigung über denselben Kanal wie den, der entweder zum Senden oder zum Empfangen genutzt wird, umfassen, wobei dieser Schritt nach dem Empfangen oder Senden einer Nachricht (424, 432) ausgeführt wird.

18. Verfahren nach Anspruch 17, bei dem die Empfangsbestätigung eine Empfangsbestätigung der RF-Übertragung ist und unmittelbar nach dem Empfangen einer Nachricht gesendet wird.

19. Verfahren nach Anspruch 15 und einem der Ansprüche 17 bis 18, bei dem die Empfangsbestätigung mit einer Transferrate gesendet oder empfangen wird, die gleich oder geringer als die der empfangenen oder gesendeten Nachricht ist.

20. Gateway (120) mit einem Radiofrequenzmodem, **dadurch gekennzeichnet, dass** es fähig ist, ein Verfahren nach einem der Ansprüche 13 bis 19 umzusetzen.

## Claims

1. Communication method in a wireless communication network (100) using a plurality of channels each having a centre frequency and a bandwidth, said network (100) comprising a plurality of connected objects (110) and at least one gateway (120), said connected objects (110) and the at least one gateway (120) being able to transmit and receive messages in each of the channels, at least one of these channels, called beacon channel, being a one-way communication channel reserved for a periodic or quasi-periodic transmission of beacon messages by the gateways (120), said beacon messages comprising:
• a preamble;
• an indication either that the gateway (120) wants to deliver a message or that it is able to receive at least one message;
• an indication of at least one channel for exchanging at least one message;
a method by which,
(A) a connected object (110) of said plurality of connected objects (110) transfers one of said messages to a gateway (120) of said at least one gateway (120) by executing the steps of:
1. listening to the beacon channel or channels (310) to detect at least part of at least one of said beacon messages;
2. selection of one of said gateways (120) transmitting a beacon message that can be perceived by the connected object;
3. reception of the beacon message transmitted by said selected gateway (120) and verification by said connected object (110), by looking up the indication contained in the beacon message, that this gateway (120) is able to receive a message (322) ;
4. transmission of said message by said connected object (110) to said selected gateway (120) over one of the at least one channel indicated in the beacon message (324);
and/or
(B) said connected object (110) of said plurality of the connected objects receives one of said messages from one of the at least one gateway (120) by executing the steps of:
1. listening to the beacon channel or channels (310) to receive at least one of said beacon messages (330);
2. verification by said connected object (110), by looking up the indication contained in the beacon message, that said gateway (120) wants to deliver a message to said connected object (331);
3. reception of one of said messages by said connected object (110) over one of the at least one channel indicated in the beacon message (332) .

2. Method according to Claim 1, wherein the step (A)1 of Claim 1 consists in listening to the beacon channel or channels to detect at least a part of at least one preamble of one of said beacon messages, said preamble part making it possible to determine an RSSI, Received Signal Strength Indication, of the signal conveying the beacon message (320) and wherein the gateway selected in step (A)2 is chosen as a function of the RSSI.

3. Method according to either one of the preceding claims, wherein the beacon message further comprises at least one identifier of at least one connected object (110) and wherein the step (B) 2 of Claim 1 consists in the verification by the connected object (110) that the at least one identifier contained in the beacon message is its own (331).

4. Method according to Claim 2, wherein the step (A) of Claim 1 comprises the additional step: choice of the transfer rate (323) as a function of the RSSI so that this rate is higher when the RSSI is high and lower when the RSSI is lower, this step being performed between the steps (A)3 and (A)4.

5. Method according to Claim 4, wherein the connected object (110) waits for a time period which is a function of the chosen transfer rate before performing the step (A)4.

6. Method according to any one of the preceding claims, wherein the steps (A) and/or (B) respectively comprise the steps of reception and transmission of an acknowledgement (325, 333) over the same channel as that used either for the transmission or for the reception, this step being executed after the transmission or the reception of a message.

7. Method according to Claim 6, wherein the acknowledgement is an acknowledgement of the radiofrequency transmission and is sent directly after the reception of a message.

8. Method according to either one of Claims 6 and 7, wherein the acknowledgement is transmitted or received with a transfer rate equal to or less than that of the message received or transmitted.

9. Method according to either one of Claims 2 and 4, wherein the gateway (120) chosen in the step (A)2 is a gateway (120) having the highest RSSI.

10. Method according to Claim 1, wherein the gateway (120) chosen in the step (A)2 is a gateway (120) having a high quality of service (QoS).

11. Method according to Claim 1, wherein the network (100) further comprises a central server, said central server being able to assign a gateway (120) to a connected object.

12. Connected object (110) comprising a radiofrequency modem, **characterized in that** it is able to implement a procedure according to any one of Claims 1 to 10.

13. Communication method in a wireless communication network (100) using a plurality of channels each having a central frequency and a bandwidth, said network (100) comprising a plurality of connected objects (110) and at least one gateway (120), said connected objects (110) and the at least one gateway (120) being able to transmit and receive messages in each of the channels, at least one of these channels, called beacon channel, being a one-way communication channel reserved for the periodic or quasi-periodic transmission of beacon messages by the gateways (120), said beacon messages being transmitted in time windows specific to each gateway (120) and comprising:
• a preamble;
• an indication either that the gateway (120) wants to deliver a message or that it is able to receive at least one message;
• an indication of at least one channel for exchanging at least one message;
a method by which
(A) one of the at least one gateway (120) transmits, in its time window, a signal conveying the beacon message (410);
(B) the beacon message indicates that said gateway wants to receive at least said message and said gateway (120) receives at least one of said messages from a connected object (110) of said plurality of connected objects (110):
1. said gateway (120) listens to the channel or channels indicated in the beacon message to detect at least one of said messages (420);
2. said gateway (120) receives (423) at least one of said messages;
and/or
(C) the beacon message indicates that said gateway wants to deliver at least said message and said gateway (120) sends at least one of said messages to at least one connected object (110) of said plurality of connected objects (110) over one of the at least one channel indicated in the beacon message (431).

14. Method according to Claim 13, wherein the beacon message further comprises at least one identifier of at least one connected object (110) and wherein the at least one connected object (110) to which a message is sent in the step (C) of Claim 13 is identified by at least said identifier.

15. Method according to either of Claims 13 and 14, wherein the step (B)1 of Claim 13 consists in: the gateway (120) scans different transfer rates simultaneously or sequentially (421) and listens on the channel or channels indicated in the beacon message to detect a message (422).

16. Method according to Claim 15, wherein the message sent by the connected object (110) comprises a preamble and wherein the step (B)1 of Claim 13 consists in: the gateway (120) scans different transfer rates and listens on the channel or channels indicated in the beacon message to detect at least a part of a preamble.

17. Method according to any one of Claims 13 to 16, wherein the steps (B) and/or (C) respectively comprise the steps of transmission and of reception of an acknowledgement over the same channel as that used either for the reception or for the transmission, this step being executed after the reception or the transmission of a message (424, 432) .

18. Method according to Claim 17, wherein the acknowledgement is an acknowledgement of the RF transmission and is sent directly after the reception of a message.

19. Method according to Claim 15 and either one of Claims 17 and 18, wherein the acknowledgement is transmitted or received with a transfer rate equal to or less than that of the message received or transmitted.

20. Gateway (120) comprising a radiofrequency modem, **characterized in that** it is able to implement a procedure according to any one of Claims 13 to 19.
